# EUROPEAN PATENT APPLICATION

(11) **EP 3 920 524 A1**
(43) Date of publication of application: **08.12.2021**
(21) Application number: 20778172.5
(22) Date of filing: 14.03.2020
(51) Int. Cl.: H04N 5/232, H04N 13/00, H04N 5/265

(54) **IMAGE PROCESSING METHOD AND HEAD-MOUNTED DISPLAY DEVICE**

(30) Priority: 25.03.2019 CN 201910228846
(71) Applicant: Huawei Technologies Co., Ltd., Shenzhen, Guangdong 518129 (CN)
(72) Inventor: LIANG, Tianying, Shenzhen, Guangdong 518129 (CN); LAI, Wujun, Shenzhen, Guangdong 518129 (CN)
(74) Representative: Gill Jennings & Every LLP
(86) International application number: PCT/CN2020/079387
(87) International publication number: WO 2020/192458

(57) **Abstract**

This application provides an image processing method and a head mounted display device, and relates to the field of communications technologies. An image of high resolution is provided for a central region of a user, and an image of low resolution is provided for a background region, to meet an image definition requirement of the head mounted display device and reduce an image data amount. The method may be applied to an HMD. The HMD includes two modules. Each module includes a camera module, a display screen corresponding to the camera module, and a processing module. The camera module includes a first camera and a second camera. Each module performs the following method: in response to a detected startup operation, the first camera collects a first image of low resolution, and the second camera collects a second image of high resolution; the processing module generates a fourth image based on the first image and the second image, where the fourth image includes an image of the low resolution and an image of the high resolution; the processing module generates a fifth image based on the fourth image and a third image that includes a virtual object; and the display screen displays the fifth image.

## Description

This application claims priority to Chinese Patent Application No. 201910228846.3, filed with the China National Intellectual Property Administration on March 25, 2019 and entitled "IMAGE PROCESSING METHOD AND HEAD MOUNTED DISPLAY DEVICE", which is incorporated herein by reference in its entirety.

### TECHNICAL FIELD

This application relates to the field of communications technologies, and in particular, to an image processing method and a head mounted display device.

### BACKGROUND

Augmented reality (Augmented Reality, AR) is a technology that calculates a location and an angle of a camera video in real time and adds a corresponding image, video, or 3D (Three Dimensional) model. Atypical video-perspective-based head mounted display device (or referred to as a head mounted display (Head-mounted display, HMD)) may capture a real scene image by using a camera, then composite the captured image with a virtual object, and display a composite image on a screen of the head mounted display device.

When a user wears the head mounted display device, the screen of the head mounted display device is close to human eyes, and when the human eyes feel optimal definition, angle resolution of an image may reach 60 PPD (Pixels Per Degree). However, no current head mounted display device can meet the resolution requirement. If resolution of a real scene image captured by a camera is improved, a data amount of image processing and complexity of the image processing are greatly increased, causing problems such as an increased display delay and user dizziness.

### SUMMARY

This application provides an image processing method and a head mounted display device, to meet a definition requirement of viewing an image by a user by using a head mounted display device, and help reduce a data amount and a display delay.

According to a first aspect, this application provides an image processing method, applied to a head mounted display device. Two modules are disposed in the head mounted display device, each module includes a camera module, a display screen corresponding to the camera module, and a processing module, the camera module includes a first camera and a second camera, a field of view of the first camera is greater than a field of view of the second camera, and each module performs the following method: in response to a detected startup operation, the first camera collects a first image of first resolution, and the second camera collects a second image of second resolution, where the first resolution is less than the second resolution; the processing module generates a fourth image based on the first image and the second image, where the fourth image is a real scene image and includes an image of the first resolution and an image of the second resolution; the processing module generates a fifth image based on the fourth image and a third image that includes a virtual object, where the fifth image includes the real scene image and the virtual object; and the display screen of the module displays the fifth image.

It can be learned that, because a field of view of the first image collected by the first camera is large, a field of view of a background region in the fifth image is large, so that a wider angle of view can be provided for a user, thereby meeting a requirement that a field of view of a human eye of the user is relatively wide. In addition, because the second resolution of the second image captured by the second camera is high, an image of a central region in the fifth image has high resolution, so that a high-definition image within a line-of-sight focus range of the user can be provided for the user. It can be learned that the technical solution provided in this application helps improve an immersion feeling, a reality feeling, and visual experience of the user.

In addition, because the first resolution of the first image collected by the first camera is low, an image of the background region in the fifth image has low resolution, so that a data amount during image processing and calculation complexity can be reduced, thereby helping reduce a delay during display.

In a possible implementation, a distance from an optical center of a first camera of one module to an optical center of a first camera of the other module is 61 millimeters to 65 millimeters.

It can be learned that the distance between the first cameras in the two camera modules is enabled to be consistent with a pupil distance between two eyes of the user, so that a real scene viewed by the two eyes of the user can be simulated.

In a possible implementation, a distance from an optical center of the first camera to an optical center of the second camera in each module is less than 20 millimeters.

It can be learned that second cameras in the two camera modules are used to collect images in visual focus regions of the user. Therefore, in a same camera module, a second camera is as close as possible to a first camera.

In a possible implementation, each module further includes an eyepiece, and the display screen is located between the eyepiece and the camera module.

In a possible implementation, an optical center of the eyepiece, an optical center of the display screen, and the optical center of the first camera in each module are located on a straight line.

In this application, a large field-of-view camera in a left camera module and a large field-of-view camera in a right camera module are used to simulate the two eyes of the user to photograph real scene images. Therefore, optical centers of the two cameras are respectively aligned with centers of the left and right eyes of the user. Furthermore, because the real scene images are finally presented by using a first display screen and a second display screen, to enable the user to feel immersed and real, optical centers of the first display screen and the second display screen should also be respectively aligned with the centers of the left and right eyes of the user. In addition, the user separately views the images on the displays by using a first eyepiece and a second eyepiece. Therefore, the first eyepiece and the second eyepiece should also be respectively aligned with the centers of the left and right eyes of the user.

In a possible implementation, that the processing module generates a fourth image based on the first image and the second image includes: the processing module adjusts an angle of view of the second image to be the same as an angle of view of the first image; and generates the fourth image based on an adjusted second image and the first image.

The second image and the first image have a same photographed object, but there is a specific angle-of-view difference between images of the same photographed object in the two images due to different locations of the first camera and the second camera. Therefore, the angles of view of the two images need to be aligned.

In a possible implementation, that the processing module adjusts an angle of view of the second image to be the same as an angle of view of the first image includes: the processing module performs rotation, translation, and non-coplanar row calibration processing on the second image, to enable the angle of view of the second image to be the same as the angle of view of the first image.

In a possible implementation, that the processing module generates the fourth image based on an adjusted second image and the first image includes: the processing module determines, as target regions, a region in the adjusted second image and a region in the first image that have overlapped angles of view; and replaces an image of the target region in the first image with the adjusted second image.

The image of the target region in the first image may be removed, and then an image of the target region in the second image obtained after the angle-of-view alignment may be filled. After the filling, to avoid a problem such as an aliasing feeling caused in an image composition process, composition edge locations of the two images (namely, edge locations of the target regions) are blended by using a weighted blending method, so that a final composite image (namely, the fourth image) is more natural and real.

The image composition method may be any one or several of a direct cut-paste (cut-paste) technology, Alpha blending (alpha blending), multiband blending (multiband blending), or poisson blending (poisson blending). A specific image composition method is not limited in this application.

In a possible implementation, before that the processing module generates a fifth image based on the fourth image and a third image that includes a virtual object, the method further includes: the processing module generates, based on posture information of the head mounted display device and the first image, the third image that includes the virtual object.

In a possible implementation, the generating a fifth image based on the fourth image and a third image that includes a virtual object includes: adjusting resolution of the third image based on the first resolution of the first image, and/or adjusting a shadow of the virtual object in the third image based on light information in the first image; and generating the fifth image based on the fourth image and an adjusted third image.

According to a second aspect, this application provides a head mounted display device, including two modules and a memory. Each module includes a camera module, a display screen corresponding to the camera module, and a processing module, the camera module includes a first camera and a second camera, a field of view of the first camera is greater than a field of view of the second camera, the memory is configured to store computer program code, the computer program code includes a computer instruction, and when the processing module reads the computer instruction from the memory, each module in the head mounted display device is enabled to perform the following operations: in response to a detected startup operation, the first camera collects a first image of first resolution, and the second camera collects a second image of second resolution, where the first resolution is less than the second resolution; the processing module generates a fourth image based on the first image and the second image, where the fourth image is a real scene image and includes an image of the first resolution and an image of the second resolution; the processing module generates a fifth image based on the fourth image and a third image that includes a virtual object, where the fifth image includes the real scene image and the virtual object; and the display screen of the module displays the fifth image.

In a possible implementation, a distance from an optical center of a first camera of one module to an optical center of a first camera of the other module is 61 millimeters to 65 millimeters.

In a possible implementation, a distance from an optical center of the first camera to an optical center of the second camera in each module is less than 20 millimeters.

In a possible implementation, each module further includes an eyepiece, and the display screen is located between the eyepiece and the camera module.

In a possible implementation, when the head mounted display device is horizontally placed, a connection line between the optical center of the first camera and the optical center of the second camera in each module is parallel to a horizontal plane.

In a possible implementation, an optical center of the eyepiece, an optical center of the display screen, and the optical center of the first camera in each module are located on a straight line.

In a possible implementation, when the processing module reads the computer instruction from the memory, each module in the head mounted display device is further enabled to perform the following operations: the processing module adjusts an angle of view of the second image to be the same as an angle of view of the first image; and generates the fourth image based on an adjusted second image and the first image.

In a possible implementation, when the processing module reads the computer instruction from the memory, each module in the head mounted display device is further enabled to perform the following operation: the processing module performs rotation, translation, and non-coplanar row calibration processing on the second image, to enable the angle of view of the second image to be the same as the angle of view of the first image.

In a possible implementation, when the processing module reads the computer instruction from the memory, each module in the head mounted display device is further enabled to perform the following operations: the processing module determines, as target regions, a region in the adjusted second image and a region in the first image that have overlapped angles of view; and replaces an image of the target region in the first image with the adjusted second image.

In a possible implementation, when the processing module reads the computer instruction from the memory, each module in the head mounted display device is further enabled to perform the following operation: the processing module generates, based on posture information of the head mounted display device and the first image, the third image that includes the virtual object.

In a possible implementation, when the processing module reads the computer instruction from the memory, each module in the head mounted display device is further enabled to perform the following operations: the processing module adjusts resolution of the third image based on the first resolution of the first image, and/or adjusts a shadow of the virtual object in the third image based on light information in the first image; and generates the fifth image based on the fourth image and an adjusted third image.

According to a third aspect, a computer storage medium is provided, including computer instructions. When the computer instructions are run on a terminal, the terminal is enabled to perform the method according to any one of the first aspect and the possible implementations of the first aspect.

According to a fourth aspect, a computer program product is provided. When the computer program product is run on a computer, the computer is enabled to perform the method according to any one of the first aspect and the possible implementations of the first aspect.

### BRIEF DESCRIPTION OF DRAWINGS

FIG. 1A is a schematic diagram of fields of view of different regions in an image according to an embodiment of this application;
FIG. 1B is a schematic structural diagram of a head mounted display device according to an embodiment of this application;
FIG. 2A is a schematic structural diagram of camera modules of some head mounted display devices according to an embodiment of this application;
FIG. 2B is a schematic structural diagram of another head mounted display device according to an embodiment of this application;
FIG. 3 is a schematic structural diagram of another head mounted display device according to an embodiment of this application;
FIG. 4 is a schematic structural diagram of another head mounted display device according to an embodiment of this application;
FIG. 5 is a schematic structural diagram of another head mounted display device according to an embodiment of this application;
FIG. 6 is a schematic flowchart of an image processing method according to an embodiment of this application; and
FIG. 7 is a schematic diagram of an image processing process according to an embodiment of this application.

### DESCRIPTION OF EMBODIMENTS

The following describes the technical solutions in embodiments of this application with reference to the accompanying drawings in the embodiments of this application. In the description of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the description of the embodiments of this application, unless otherwise stated, "a plurality of' means two or more.

In the embodiments of this application, the word such as "example" or "for example" is used to represent giving an example, an illustration, or a description. Any embodiment or design solution described as an "example" or "for example" in the embodiments of this application should not be explained as being more preferred or having more advantages than another embodiment or design solution. Exactly, use of the word such as "example" or "for example" is intended to present a relative concept in a specific manner.

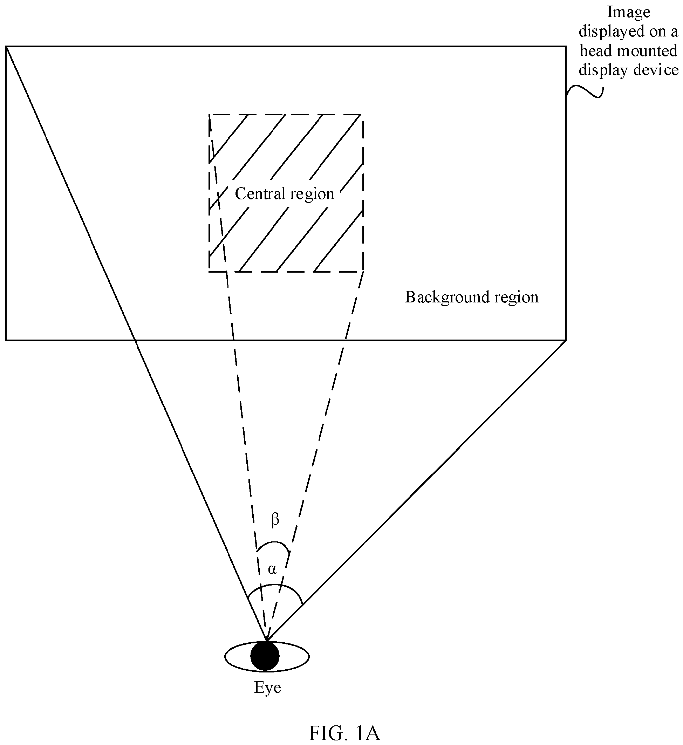

Image resolution of current head mounted display devices generally cannot meet a definition requirement of a user during short-distance viewing. In addition, merely improving image resolution causes problems such as an increase in a data amount and complexity of image processing. It is considered that a human eye has such a visual feature: during observation, a region directly in front of an eye of a user is usually a visual focus region. This part of region is most sharply sensed and has a high image resolution requirement for a head mounted display device. However, another region visible by the eye is not sharply sensed by the user and has a low image resolution requirement for the head mounted display device. That is, an image displayed on the head mounted display device may be divided into a central region and a background region. As shown in FIG. 1A, an image displayed on a head mounted display device includes a central region and a background region. The central region is a visual focus region of a user, and may provide an image of relatively high resolution, to meet a definition requirement of a human eye of the user during short-distance viewing. The background region is a part other than the central region in the image, and may provide only an image of relatively low resolution, to reduce a data amount and complexity of image processing performed by the head mounted display device. In other words, resolution of the central region is higher than resolution of the background region. It should be noted that, in FIG. 1A, a rectangle is used to illustrate the visual focus region (namely, the central region) of the human eye of the user, and is mainly used to represent an approximate location of the central region in the image displayed on the head mounted display device. This constitutes no limitation on a shape of the visual focus region of the human eye of the user.

In addition, it is considered that a field of view of the human eye is relatively large and may reach 180 degrees, but a field of view of a conventional head mounted display device is relatively small, and consequently a relatively large quantity of blind regions may appear on both sides when the user uses the head mounted display device for observation, causing an insufficient immersion feeling of the user. This application provides that a large field-of-view camera is used to capture a relatively large field-of-view image (an image that includes a background region), where a large field-of-view image usually has low resolution; and simultaneously, a small field-of-view camera is used to capture a high-definition image of a central region. In the image shown in FIG. 1A, a field of view α corresponding to the background region is greater than a field of view β corresponding to the central region.

It should be noted that the field of view is used to indicate a maximum angle range that can be photographed by a camera during image photographing. If a to-be-photographed object falls within the angle range, the to-be-photographed object is collected by the camera and then presented in a preview image. If the to-be-photographed object falls outside the angle range, the photographed device is not collected by the image capture apparatus; in other words, not presented in the preview image. Usually, a larger field-of-view camera corresponds to a larger photographing range and a shorter focal length, and a smaller field-of-view camera corresponds to a smaller photographing range and a longer focal length.

Generally, the field of view includes an angle in a horizontal direction and an angle in a vertical direction. In this application, an angle in a horizontal direction and an angle in a vertical direction may be separately represented by using two fields of view, or an angle in a horizontal direction and an angle in a vertical direction may be both represented by using one field of view. For ease of description, this application provides all descriptions below by using an example that one field of view represents both an angle in a horizontal direction and an angle in a vertical direction. For example, as shown in FIG. 1A, the field of view α is an angle corresponding to diagonal lines of two edges of an image (namely, an image of the background region) captured by a large field-of-view camera, and may represent both an angle in a horizontal direction and an angle in a vertical direction. β is an angle corresponding to diagonal lines of two edges of an image (namely, an image of the central region) captured by a small field-of-view camera, and may represent both an angular width in a horizontal direction and an angular width in a vertical direction.

In this application, the "field of view" may also be referred to as a word such as a "field of view range" or a "field of vision range". A name of the "field of view" is not limited in this specification, provided that the foregoing concept is expressed.

Then, the large field-of-view image is composited with the high-definition image of the central region to obtain a real scene image. Then, an image that includes a virtual object is generated based on obtained posture information of the head mounted display device and the large field-of-view image. Finally, the image that includes the virtual object is further composited with the real scene image obtained after the first composition, to obtain an image that includes a real scene and the virtual object, and the image is displayed on the head mounted display device. In this case, a field of view of the displayed image is relatively large, and may be as close as possible to the field of view of the human eye. In addition, resolution of an image in a visual focus region of the human eye is relatively high. This meets a definition requirement of the user during short-distance image viewing, thereby greatly improving an immersion feeling of the user and improving visual experience.

The technical solutions provided in the embodiments of this application may be applied to a head mounted display device or the like in a scenario such as virtual reality (Virtual Reality, VR)/augmented reality (Augmented Reality, AR)/mixed reality (Mixed Reality, MR). A specific form of the head mounted display device that performs the technical solutions is not specifically limited in this application.

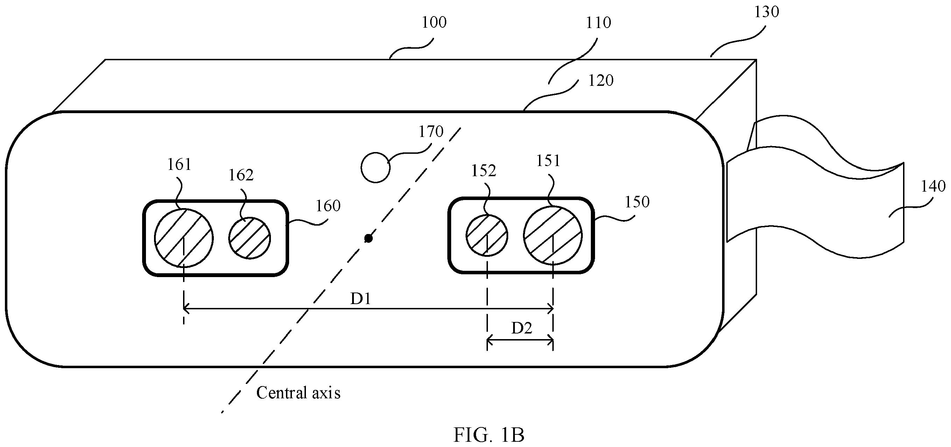

FIG. 1B is a schematic structural diagram of a head mounted display device 100 according to an embodiment of this application. The head mounted display device 100 includes a helmet body 110 and a belt 140. The belt 140 is configured to wear the head mounted display device 100 on a head of a user. The helmet body 110 has a front panel 120 and a rear panel 130 opposite to the front panel 120. The front panel 120 is a surface far away from the user when the user wears the head mounted display device 100. The rear panel 130 is a surface close to the user when the user wears the head mounted display device 100.

Two camera modules are disposed on the front panel 120: a left camera module 150 and a right camera module 160, to capture real scene images in front of the user. The left camera module 150 is located in front of a left eye of the user, and the right camera module 160 is located in front of a right eye of the user. Each camera module includes at least two cameras, and the at least two cameras include at least one large field-of-view camera and at least one small field-of-view camera. The at least one large field-of-view camera (for example, having a field of view from 100 degrees to 200 degrees and resolution from VGA to 720p) is, for example, a camera 151 and a camera 161. The at least one small field-of-view camera (for example, having a field of view from 20 degrees to 60 degrees and resolution from 720p to 2Kp) is for example, a camera 152 and a camera 162. An image captured by the large field-of-view camera has a relatively large field of view and relatively low resolution. An image captured by the small field-of-view camera has a relatively small field of view and relatively high resolution.

In this application, the image captured by the large field-of-view camera has the relatively large field of view, so that a wider angle of view can be provided for the user, thereby meeting a requirement that a field of view of the human eye of the user is relatively wide. The image captured by the small field-of-view camera has the relatively high resolution, so that an image within a line-of-sight focus range of the user can be provided for the user. It can be learned that, in this application, the image captured by the large field-of-view camera is composited with the image captured by the small field-of-view camera, and then a composite image is applied to a scenario such as AR/VR/MR, thereby helping improve an immersion feeling, a reality feeling, and visual experience of the user. In addition, an image of a background region has low resolution, so that a data amount during image processing and calculation complexity can be further reduced, thereby helping reduce a delay during display.

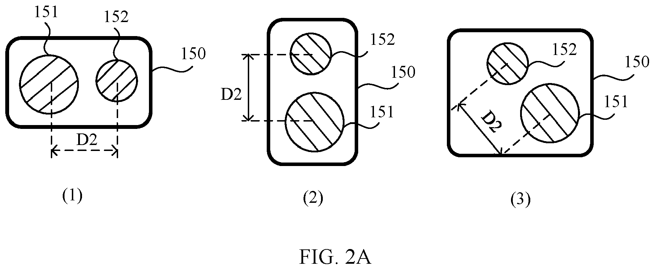

In some embodiments, when the left and right camera modules each include one large field-of-view camera for photographing a real scene image, a distance D1 between optical centers of the two large field-of-view cameras (for example, the camera 151 and the camera 161) is approximately consistent with a pupil distance of the two eyes of the user. Therefore, D1 usually ranges from 61 mm to 65 mm, and may be, for example, 63 mm. In one camera module, a small field-of-view camera is located near a large field-of-view camera. Usually, a distance D2 between an optical center of the small field-of-view camera and an optical center of the large field-of-view camera is less than 20 mm. FIG. 1B shows a central axis of the head mounted display device 100 when the head mounted device is approximately horizontally placed forward. Referring to the central axis, the following uses the camera module 150 in front of the left eye as an example to describe a location of the small field-of-view camera 152 relative to the large field-of-view camera 151. For example, facing the front panel 120, the small field-of-view camera 152 may be located on a left side of the large field-of-view camera 151 (in other words, the small field-of-view camera 152 is closer to the central axis than the large field-of-view camera 151, as shown in FIG. 1B) or on a right side of the large field-of-view camera 151 (in other words, the small field-of-view camera 152 is farther away from the central axis than the large field-of-view camera 151, as shown in FIG. 2A(1)); and optical centers of the large field-of-view camera 151, the small field-of-view camera 152, the large field-of-view camera 161, and the small field-of-view camera 162 are approximately located on one horizontal plane.

For another example, when the head mounted device is approximately horizontally placed forward as shown in FIG. 1B, the small field-of-view camera 152 may be located above the large field-of-view camera 151 (in other words, a direction from an optical center of the small field-of-view camera 152 to an optical center of the large field-of-view camera 151 is the same as a gravity direction, as shown in FIG. 2A(2)) or below the large field-of-view camera 151 (in other words, a direction from an optical center of the small field-of-view camera 152 to an optical center of the large field-of-view camera 151 is opposite to a gravity direction). Alternatively, the small field-of-view camera 152 may be located at any location such as an oblique upper side (as shown in FIG. 2A(3)) or an oblique lower side of the large field-of-view camera 151. That is, a relative location relationship between a small field-of-view camera and a large field-of-view camera in one camera module is not limited in this application. Certainly, the small field-of-view camera may be fastened at a location near the large field-of-view camera. Alternatively, the small field-of-view camera may be located in a rotatable or removable apparatus; in other words, the small field-of-view camera may be moved near the large field-of-view camera. The foregoing descriptions of the small field-of-view camera 152 and the large field-of-view camera 151 are respectively applicable to the small field-of-view camera 162 and the large field-of-view camera 161. These are not repeated in this embodiment of this application.

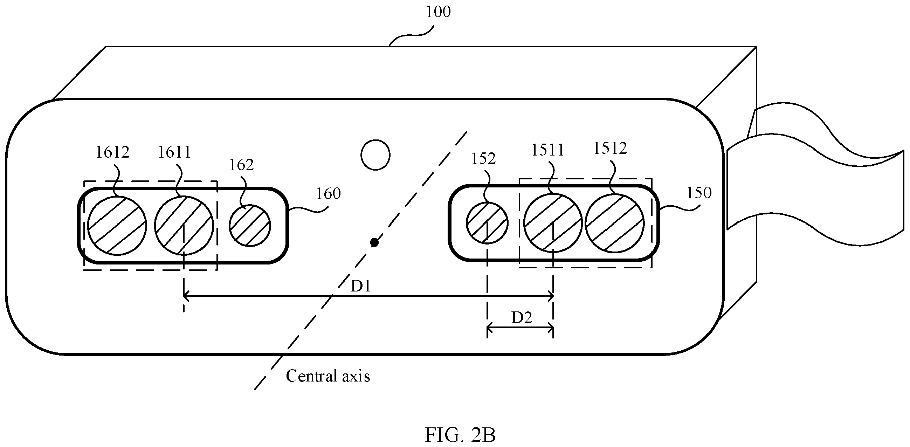

In some other embodiments, the left and right camera modules each include two or more large field-of-view cameras; in other words, a real scene image is obtained by compositing or splicing images captured by a plurality of cameras. In this case, usually, one large field-of-view camera may be disposed as a main camera in each of the left and right camera modules. That is, an angle of view of an image photographed by the main camera is used as a reference to composite and splice images photographed by other large field-of-view cameras, to obtain a real scene image. In this case, a distance between optical centers of the two main cameras is D1 and should be kept consistent with a pupil distance of the two eyes of the user. In one camera module, a small field-of-view camera is located near a main camera in large field-of-view cameras. Usually, a distance between an optical center of the small field-of-view camera and an optical center of the main camera is D2 and less than 20 mm. For example, as shown in FIG. 2B, the left and right camera modules of the head mounted display device 100 each include two large field-of-view cameras. That is, the left camera module 150 includes two large field-of-view cameras: a camera 1511 and a camera 1512, and the right camera module 160 includes two large field-of-view cameras: a camera 1611 and a camera 1612. It is assumed that two large field-of-view cameras (namely, the camera 1511 and the camera 1611) close to the central axis are disposed as main cameras. In this case, a distance between an optical center of the camera 1511 and an optical center of the camera 1611 is D1. A small field-of-view camera is located near a main camera in large field-of-view cameras. That is, a distance between an optical center of the camera 152 and the optical center of the camera 1511 is D2, and a distance between an optical center of the camera 162 and the optical center of the camera 1611 is D2.

In still some other embodiments, a sensor that senses movement of the head mounted display device 100, such as an inertial measurement unit (Inertial measurement unit, IMU) 170 configured to measure posture information of the head mounted display device 100 such as a three-axis posture angle (or an angular velocity) and an acceleration of the head mounted display device 100, may be further disposed on the front panel 120. Usually, the IMU includes three accelerometers and three gyroscopes, and the accelerometers and the gyroscopes are mounted on mutually perpendicular measurement axes. A low-precision IMU may be further corrected in another manner. For example, a GPS is used to correct a long-term location drift, a barometer is used to correct a height, or a magnetometer is used to correct a posture. In a scenario such as VR/AR/MR, the posture information that is of the head mounted display device 100 and that is obtained by the IMU 170 and real scene images obtained by the camera modules may be used to locate and compose a real scene in which the head mounted display device 100 is located.

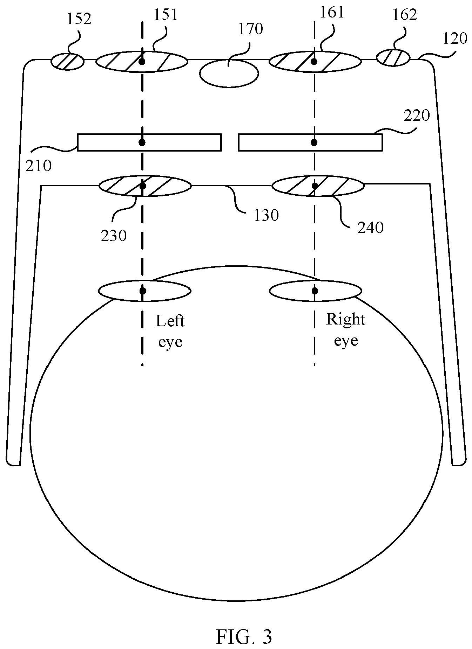

To describe components of the head mounted display device 100 and location relationships between the components more clearly, this embodiment of this application provides a top view of the head mounted display device 100 worn by the user, as shown in FIG. 3. FIG. 3 shows an example that the left and right camera modules each include one large field-of-view camera and one small field-of-view camera.

A left eyepiece 230 and a right eyepiece 240 respectively corresponding to the left and right eyes are disposed on the rear panel 130 of the head mounted display device 100. The head mounted display device 100 internally includes displays respectively corresponding to the left and right eyepieces. It may be understood that a field of view of the display is not less than a field of view of the large field-of-view camera in the camera module, so that the display can completely present an image photographed by the large field-of-view camera. The left eyepiece 230 corresponds to a left display 210, and the right eyepiece 240 corresponds to a right display 220. The left and right eyepieces may help the human eyes focus the left and right displays, and the like, so that the left eye of the user can view, by using the left eyepiece 230, an image displayed on the left display 210, and the right eye of the user can view, by using the right eyepiece 240, an image displayed on the right display 220. It should be noted that the left display 210 and the right display 220 may be two independent displays, or may be different display regions in one display. This is not limited in this embodiment of this application.

It may be further learned from FIG. 3 that, the left camera module 150 corresponding to the left eye of the user is disposed on the front panel 120 of the head mounted display device 100, including the large field-of-view camera 151 and the small field-of-view camera 152, and the right camera module corresponding to the right eye of the user is disposed on the front panel 120 of the head mounted display device 100, including the large field-of-view 161 and the small field-of-view camera 162. The IMU 170 may be further disposed on the front panel 120.

In this way, after two images captured by the two cameras in the left camera module 150 are processed by using the method provided in this application, a processed image is displayed on the left display 210 in front of the left eye for viewing by the left eye. After two images captured by the two cameras in the right camera module 160 are processed by using the method provided in this application, a processed image is displayed on the right display 220 in front of the right eye for viewing by the right eye. Generally, the cameras in the left camera module 150 and in the right camera module 160 simultaneously capture images. In addition, due to a location difference between the left camera module 150 and the right camera module 160, there is also an angle-of-view difference between images simultaneously captured by the two modules, and the angle-of-view difference is the same as a visual difference of a face. Therefore, a 3D angle-of-view effect is generated when the two eyes of the user simultaneously view the two images from the left display 210 and the right display 220.

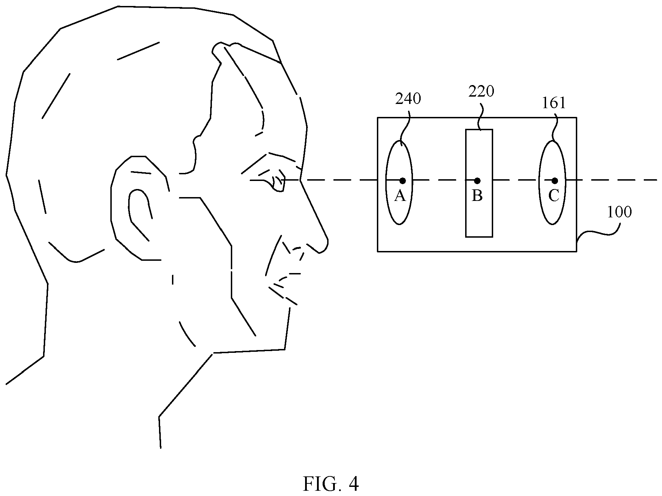

It can be learned that in this application, the large field-of-view camera in the left camera module and the large field-of-view camera in the right camera module are used to simulate the two eyes of the user to photograph real scene images. Therefore, optical centers of the two cameras are respectively aligned with centers of the left and right eyes of the user. Furthermore, because the real scene images are finally presented by using the left display 210 and the right display 220, to enable the user to feel immersed and real, optical centers of the left display 210 and the right display 220 should also be respectively aligned with the centers of the left and right eyes of the user. In addition, in the head mounted display device 100, the user separately views the images on the displays by using the left eyepiece 230 and the right eyepiece 240. Therefore, optical centers of the left eyepiece 230 and the right eyepiece 240 should also be respectively aligned with the centers of the left and right eyes of the user. FIG. 4 shows a schematic diagram in which the user uses the head mounted display device for viewing. The right eye is used as an example. A center of the right eye of the user, an optical center A point of the right eyepiece 240, an optical center B point of the right display 220, and an optical center C point of the large field of view 161 in the right camera module are located on a straight line, or are approximately located on a straight line.

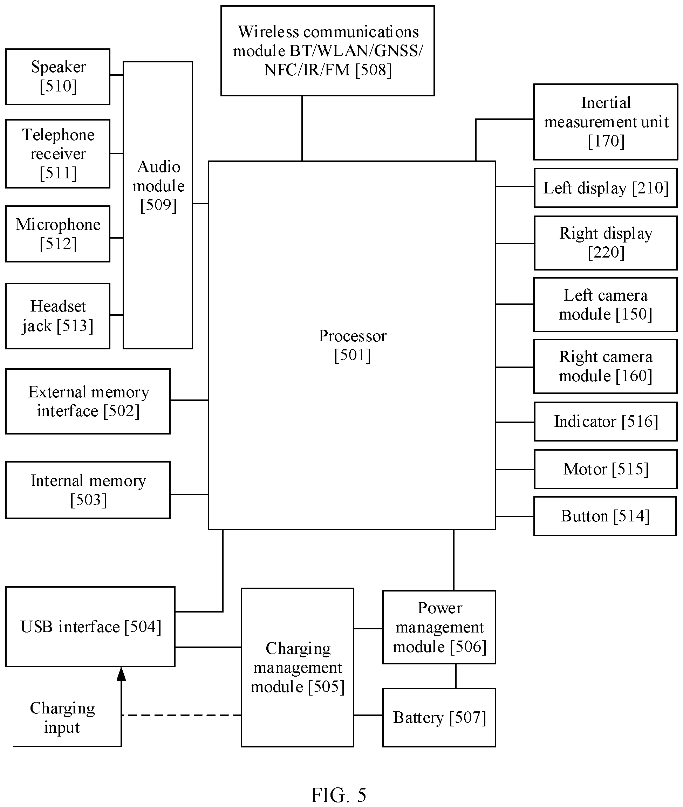

FIG. 5 is a schematic structural diagram of another head mounted display device 100 according to an embodiment of this application. In addition to the components shown in FIG. 1B to FIG. 3 (such as the left camera module 150, the right camera module 160, the left display 210, the right display 220, and the IMU 170), the head mounted display device 100 may further include a processor 501, an external memory interface 502, an internal memory 503, a universal serial bus (universal serial bus, USB) interface 504, a charging management module 505, a power management module 506, a battery 507, a wireless communications module 508, an audio module 509, a speaker 510, a telephone receiver 511, a microphone 512, a headset jack 513, a button 514, a motor 515, and an indicator 516.

It may be understood that the schematic structure in this embodiment of the present invention constitutes no specific limitation on the head mounted display device 100. In some other embodiments of this application, the head mounted display device 100 may include more or fewer components than those shown in the figure, or combine some components, or split some components, or have different component arrangements. The components shown in the figure may be implemented by using hardware, software, or a combination of software and hardware.

The processor 501 includes one or more processing units. For example, the processor 501 may include an application processor (application processor, AP), a modem processor, a graphics processing unit (graphics processing unit, GPU), an image signal processor (image signal processor, ISP), a controller, a video coder/decoder, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 501, to store an instruction and data. In some embodiments, the memory in the processor 501 is a cache. The memory may store an instruction or data that is just used or cyclically used by the processor 501. If the processor 501 needs to use the instruction or the data again, the processor 501 may directly invoke the instruction or the data from the memory. This avoids repeated access, and reduces waiting time of the processor 501, thereby improving system efficiency.

In some embodiments, the processor 501 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that schematic interface connection relationships between the modules in this embodiment of this application are merely illustration descriptions, and constitute no limitation on a structure of the head mounted display device 100. In some other embodiments of this application, the head mounted display device 100 may use interface connection manners different from those in the foregoing embodiment, or use a combination of a plurality of interface connection manners.

The charging management module 505 is configured to receive charging input from a charger. The charger may be a wireless charger, or may be a wired charger. In some embodiments of wired charging, the charging management module 505 may receive charging input from a wired charger by using the USB interface 504. In some embodiments of wireless charging, the charging management module 505 may receive wireless charging input by using a wireless charging coil of the head mounted display device 100. When charging the battery, the charging management module 505 may further supply power to the head mounted display device by using the power management module.

The power management module 506 is configured to connect to the battery 507, the charging management module 505, and the processor 501. The power management module 506 receives input from the battery 507 and/or the charging management module 505, to supply power to the processor 501, the internal memory, the left display 210, the right display 220, the camera module 150, the camera module 160, the wireless communications module, and the like. The power management module 506 may be further configured to monitor parameters such as a capacity of the battery 507, a cycle count of the battery 507, and a state of health (electric leakage and impedance) of the battery 507. In some other embodiments, the power management module 506 may be disposed in the processor 501. In some other embodiments, the power management module 506 and the charging management module 505 may be disposed in a same component.

The wireless communications module 508 may provide a wireless communications solution applied to the head mounted display device 100, including a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 508 may be one or more components into which at least one communication processing module is integrated. The wireless communications module 508 receives an electromagnetic wave by using an antenna, performs frequency modulation and filtering processing on an electromagnetic wave signal, and sends a processed signal to the processor 501. The wireless communications module 508 may further receive a to-be-sent signal from the processor 501, perform frequency modulation and amplification on the signal, and convert a signal obtained after the frequency modulation and amplification into an electromagnetic wave by using the antenna for radiation.

The head mounted display device 100 implements a display function by using the GPU, the left display 210, the right display 220, the application processor, and the like. The GPU is a microprocessor for image processing, and is connected to the left display 210, the right display 220, and the application processor. The GPU is configured to perform mathematical and geometrical calculation, and is configured to perform graphics rendering. The processor 501 may include one or more GPUs, and the one or more GPUs execute a program instruction to generate or change display information.

In some embodiments of this application, the head mounted display device 100 may be an integrated HMD. That is, the head mounted display device 100 may perform data processing on an obtained image and posture information of the head mounted display device 100 by using the CPU, the GPU, the NPU, the application processor, and the like, for example, perform preprocessing and image composition on a low-definition image captured by a large field-of-view camera and a high-definition image captured by a small field-of-view camera, to obtain a real scene image; generate an image that includes a virtual object; and composite the image that includes the virtual object with the real scene image.

The low-definition image captured by the large field-of-view camera is described relative to the image captured by the small field-of-view camera, and resolution of the image captured by the large field-of-view camera is lower than resolution of the image captured by the small field-of-view camera. The low-definition image captured by the large field-of-view camera meets a requirement of a user for resolution of an image of a background region during image viewing with the HDM. Likewise, the high-definition image captured by the small field-of-view camera is described relative to the image captured by the large field-of-view camera, and the resolution of the image captured by the small field-of-view camera is higher than the resolution of the image captured by the small field-of-view camera. The high-definition image captured by the small field-of-view camera meets a requirement of the user for resolution of an image of a central region during image viewing with the HDM.

In some other embodiments of this application, the head mounted display device 100 may be a split HMD. That is, the head mounted display device 100 may completely or partially hand over data processing performed on an obtained image and posture information of the head mounted display device 100 to another electronic device or apparatus. For example, the head mounted display device 100 may send, by using, for example, the USB interface 504, an obtained high-definition image and low-definition image and an obtained posture of the head mounted display device 100 to another electronic device (for example, a mobile phone, a personal computer, or a tablet computer) connected to the head mounted display device 100. The electronic device performs data processing, and then returns a processing result to the head mounted display device 100, for display by the head mounted display device 100. In this example, the head mounted display device 100 may not include any one or several hardware devices of the GPU, the NPU, the application processor, or the like.

The left display 210 is configured to display an image, a video, or the like corresponding to a left eye, and the right display 220 is configured to display an image, a video, or the like corresponding to a right eye. The left display 210 and the right display 220 each may include a display panel. The display panel may be a liquid crystal display (liquid crystal display, LCD), an organic light-emitting diode (organic light-emitting diode, OLED), an active matrix/organic light emitting diode (active-matrix organic light emitting diode, AMOLED), a flexible light-emitting diode (flex light-emitting diode, FLED), a MiniLED, a MicroLED, a Micro-OLED, a quantum dot light emitting diode (quantum dot light emitting diodes, QLED), or the like.

The head mounted display device 100 may implement a photographing function by using the ISP, the camera module 150, the camera module 160, the video coder/decoder, the GPU, the left display 210, the right display 220, the application processor, and the like.

The ISP is configured to process data fed back by the camera module 150 and the camera module 160. For example, when a camera module captures an image, a light is transmitted to a light sensing element of a camera through a lens, so that an optical signal is converted into an electrical signal; and the light sensing element of the camera transmits the electrical signal to the ISP for processing, so that the electrical signal is converted into a visible image. The ISP may further perform algorithm optimization on noise, brightness, and a complexion of the image. The ISP may further optimize parameters such as an exposure and a color temperature of a photographed scenario. In some embodiments, the ISP may be disposed in the camera module 150 and the camera module 160.

The camera module 150 and the camera module 160 each may be configured to capture a still image or video. An optical image of an object is generated through a lens, and is projected to a light sensing element. The light sensing element may be a charge coupled device (charge coupled device, CCD) or a complementary metal-oxide-semiconductor (complementary metal-oxide-semiconductor, CMOS) phototransistor. The light sensing element converts an optical signal into an electrical signal, and then transmits the electrical signal to the ISP, so that the electrical signal is converted into a digital image signal. The ISP outputs the digital image signal to the DSP for processing. The DSP converts the digital image signal into an image signal in a standard format such as RGB or YUV. In some embodiments, the head mounted display device 100 may include one or N camera modules 150, and include one or M camera modules 160. N and M each are a positive integer greater than 1.

The digital signal processor is configured to process a digital signal, and may further process another digital signal in addition to the digital image signal. For example, when the head mounted display device 100 performs frequency selection, the digital signal processor is configured to perform Fourier transform and the like on frequency energy.

The video coder/decoder is configured to compress or decompress a digital video. The head mounted display device 100 may support one or more types of video coders/decoders. In this way, the head mounted display device 100 may play or record videos in a plurality of coding formats such as moving picture experts group (moving picture experts group, MPEG) 1, MPEG 2, MPEG 3, and MPEG 4.

The NPU is a neural-network (neural-network, NN) computing processor; and quickly processes input information by using a biological neural-network structure such as a mode of transmission between human-brain nerve cells, and may further constantly perform self-learning. The NPU may be used to implement an application such as intelligent cognition of the head mounted display device 100, for example, image recognition, facial recognition, speech recognition, or text understanding.

The external memory interface 502 may be configured to connect to an external storage card such as a Micro SD card, to extend a storage capability of the head mounted display device 100. The external storage card communicates with the processor 501 by using the external memory interface 502, to implement a data storage function, for example, store a file such as music or a video in the external memory card.

The internal memory 503 may be configured to store computer executable program code, and the executable program code includes an instruction. The internal memory 503 may include a program storage region and a data storage region. The program storage region may store an operating system, an application program required by at least one function (for example, a voice playing function or an image playing function), and the like. The data storage region may store data (such as audio data and an address book) and the like created during use of the head mounted display device 100. In addition, the internal memory 503 may include a high-speed random access memory, or may include a nonvolatile memory, such as at least one magnetic disk memory, flash memory, or universal flash storage (universal flash storage, UFS). The processor 501 runs an instruction stored in the internal memory 503 and/or an instruction stored in a memory disposed in the processor 501, to execute various functional applications and data processing of the head mounted display device 100.

The head mounted display device 100 may implement an audio function, for example, perform music playing or recording, by using the audio module 509, the speaker 510, the telephone receiver 511, the microphone 512, the headset jack 513, the application processor, and the like.

The audio module 509 is configured to convert digital audio information into analog audio signal output, and is also configured to convert analog audio input into a digital audio signal. The audio module 509 may be further configured to encode and decode an audio signal. In some embodiments, the audio module 509 may be disposed in the processor 501, or some functional modules of the audio module 509 may be disposed in the processor 501.

The speaker 510 is also referred to as a "loudspeaker", and is configured to convert an audio electrical signal into a sound signal. The head mounted display device 100 may listen to music or a hands-free call by using the speaker 510.

The telephone receiver 511 is also referred to as an "earpiece", and is configured to convert an audio electrical signal into a sound signal. When the head mounted display device 100 answers a call or receives a voice message, the telephone receiver 511 may be placed near a human ear to receive voice.

The microphone 512 is also referred to as a "microphone" or a "microphone", and is configured to convert a sound signal into an electrical signal. When collecting a voice message, the user may speak with a mouth approaching the microphone 512, to input a sound signal to the microphone 512. At least one microphone 512 may be disposed in the head mounted display device 100. In some other embodiments, two microphones 512 may be disposed in the head mounted display device 100, to implement a noise reduction function in addition to collecting a sound signal. In some other embodiments, three, four, or more microphones 512 may be disposed in the head mounted display device 100, to collect a sound signal and implement noise reduction, and further recognize a sound source to implement a directional recording function and the like.

The headset jack 513 is configured to connect to a wired headset. The headset jack 513 may be a USB interface, or may be a 3.5 mm open mobile terminal platform (open mobile terminal platform, OMTP) standard interface or a cellular telecommunications industry association of the USA (cellular telecommunications industry association of the USA, CTIA) standard interface.

The button 514 includes a power-on button, a volume button, and the like. The button 514 may be a mechanical button 514, or may be a touch button 514. The head mounted display device 100 may receive input from the button 514, and generate button signal input related to user settings and function control of the head mounted display device 100.

The motor 515 may generate a vibration prompt. The motor 515 may be configured to provide a vibration prompt for an incoming call, or may be configured to provide touch vibration feedback. For example, touch operations performed on different applications (for example, photo taking and audio playing) may correspond to different vibration feedback effects. For touch operations performed on different regions of the left display 210 and the right display 220, the motor 515 may also correspond to different vibration feedback effects. Different application scenarios (for example, a time reminder, information receiving, an alarm clock, and a game) may also correspond to different vibration feedback effects. The touch vibration feedback effect may be alternatively customized.

The indicator 516 may be an indicator light, and may be configured to indicate a charging state and a battery change, or may be configured to indicate a message, a missed call, a notification, or the like.

All the technical solutions in the following embodiments may be implemented in the head mounted display device 100 shown in FIG. 1B to FIG. 5.

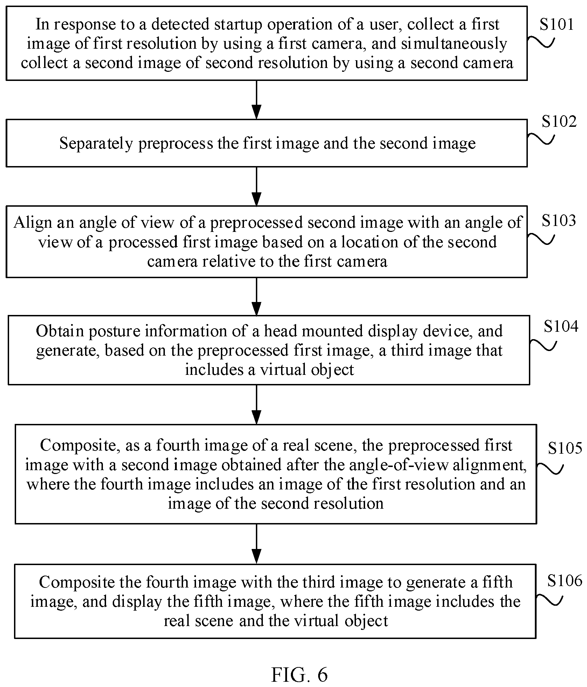

FIG. 6 is a flowchart of an image processing method according to an embodiment of this application. The method specifically includes the following steps.

S101. In response to a detected startup operation of a user, collect a first image of first resolution by using a first camera, and simultaneously collect a second image of second resolution by using a second camera.

In this embodiment of this application, two first cameras may be used to simulate two eyes of the user (a first camera on a left side corresponds to a left eye, and a first camera on a right side corresponds to a right eye). To collect an image or a video within a maximum range visible by the two eyes of the user, optical centers of the two first cameras are respectively aligned with centers of the two eyes of the user, and a field of view of each first camera should be close to a field of view of the human eye. In this way, two first images simultaneously collected by the two first cameras may be considered as two images within the maximum range visible by the two eyes of the user, and may be used as images of background regions in real scenes visible by the user. When the two first cameras collect the first images, two second cameras are used to collect images of visual focus regions of the user (a second camera on the left side corresponds to the left eye, and a second camera on the right side corresponds to the right eye), namely, images of central regions. As mentioned above, a range of the visual focus region of the user is less than the maximum range viewed by the two eyes of the user, and the visual focus region has a relatively high definition requirement. Therefore, a field of view of the second camera is less than a field of view of the first camera, and resolution (namely, the second resolution) of the second camera is higher than resolution (namely, the first resolution) of the first camera.

Fields of view of the background region and the central region and a definition requirement of the user during short-distance viewing are determined based on a visual feature of the human eye. For example, the field of view of the first camera may range from 100 degrees to 200 degrees, and the resolution (namely, the first resolution) of the first camera may range from VGA to 720p. The field of view of the second camera may range from 20 degrees to 60 degrees, and the resolution (namely, the second resolution) of the second camera may range from 720p to 2Kp.

For example, the startup operation of the user may be an operation that the user starts an AR application, may be an operation that the user starts a service, or may be an operation that the user starts a camera. For example, the user may tap a control, press a physical button, or enter a specific voice or a predefined gesture. This is not limited in this embodiment of this application.

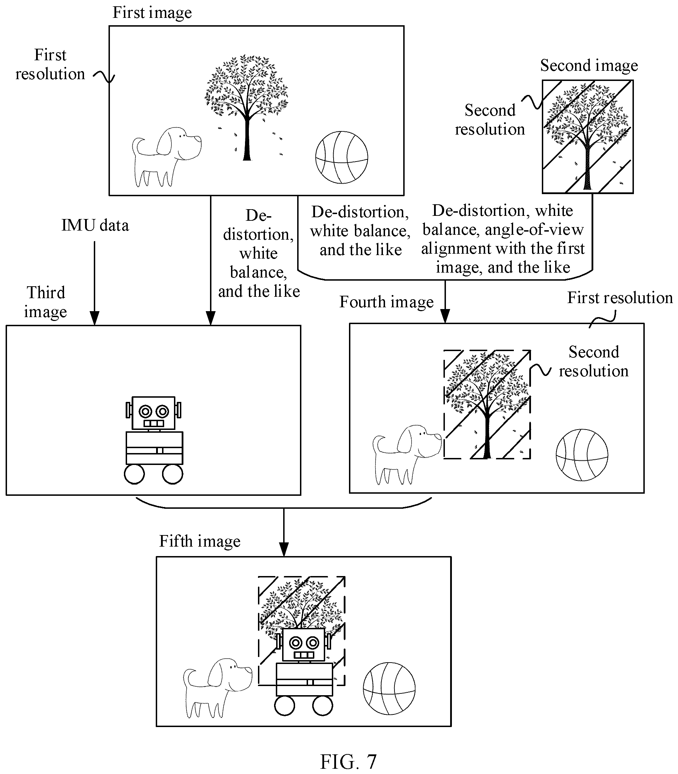

After the startup operation of the user is detected, a head mounted display device controls the two first cameras and the two second cameras to simultaneously collect images, to obtain the two first images of a large field of view. Due to a specific location difference between the two first cameras only in a horizontal direction, there is a relatively small angle-of-view difference between the two obtained first images only in the horizontal direction. For example, as shown in FIG. 7, photographed objects in a first image include a tree, a dog, and a ball, and the first image is an image of first resolution.

Because the field of view of the second camera is less than that of the first camera, the second image obtained by the second camera is a part of content in the first image and is content of a central region in the first image, but the resolution of the second image is higher than that of the first image. For example, as shown in FIG. 7, a photographed object in a second image is a tree, and the second image is an image of second resolution. It may be noted that, in FIG. 7, a shadow is used to mark the image of the second resolution to distinguish from the image of the first resolution. This is not described below again.

It should be noted that in this embodiment of this application, the head mounted display device has two camera modules (each including a first camera and a second camera) respectively corresponding to the two eyes of the user, and two displays. That is, the first camera and the second camera on the left side collect images, and after image processing, a processed image is displayed on a display on the left side, for viewing by the left eye of the user. The first camera and the second camera on the right side collect images, and after image processing, a processed image is displayed on a display on the right side, for viewing by the right eye of the user. Because the same image processing is performed on the left and right sides, the following uses an image processing process on one of the sides as an example for description. This is not described below again.

In addition, because a video photographed by a camera also includes a plurality of consecutive frames of images, processing on the video may also be understood as processing on the plurality of frames of images. Therefore, a video processing method is not described in this application.

S102. Separately preprocess the first image and the second image.

The preprocessing includes processing such as de-distortion and white balance. The camera is formed by a group of lenses, and a lens intrinsic feature causes distortion of a photographed image. Therefore, de-distortion processing needs to be performed on a photographed image based on a physical feature of each camera. In addition, due to impact of factors such as ambient light, an original image photographed by the camera is distorted. Therefore, processing such as white balance further needs to be performed on the photographed image. That is, the first image is preprocessed based on a physical feature of the first camera, and the second image is preprocessed based on a physical feature of the second camera. It should be noted that the preprocessing does not change the fields of view, resolution, photographed objects, or the like in the first image and the second image.

Both the image de-distortion processing and white balance processing may be performed by using related technologies in the art. Details are not described herein.

S103. Align an angle of view of a preprocessed second image with an angle of view of a processed first image based on a location of the second camera relative to the first camera.

The preprocessed second image and the preprocessed first image have a same photographed object, but there is a specific angle-of-view difference between images of the same photographed object in the two images due to different locations of the first camera and the second camera. Therefore, the angles of view of the two images need to be aligned. The foregoing describes a location relationship between a first camera and a second camera in one camera module in detail. Therefore, the angle-of-view difference between the two images may be determined based on the location relationship, and then the angle of view of the preprocessed second image may be adjusted, based on the angle-of-view difference, to be consistent with the angle of view of the preprocessed first image. It can be learned from computer graphics that an angle-of-view adjustment process includes processes such as rotation, translation, and non-coplanar row calibration on the preprocessed second image. For a related angle-of-view adjustment method, refer to the prior art. Details are not described herein.

It should be noted that, alternatively, an angle of view of the second image may be first aligned with an angle of view of the first image on a same side, and then a second image obtained after the angle-of-view alignment is preprocessed. A sequence of the angle-of-view alignment step and the preprocessing step is not limited in this embodiment of this application.

S104. Obtain posture information of the head mounted display device, and generate, based on the preprocessed first image, a third image that includes a virtual object.

For example, the head mounted display device performs single-channel data extraction and downsampling on the preprocessed first image, and with reference to posture information (that is, posture information of the head mounted display device during collection of the first image) obtained from a motion sensor (for example, an IMU), calculates location and posture information of the head mounted display device, depth information of a real environment, and a three-dimensional reconstruction result by using a simultaneously localization and mapping SLAM (Simultaneously Localization and Mapping) algorithm. Then, the third image that includes the virtual object is generated with reference to the virtual object generated by a related application (for example, an AR application) in the head mounted display device. As shown in FIG. 7, the virtual object generated by the head mounted display device is a robot, and an image, namely, the third image, that includes the robot is generated based on the calculated location and posture information, the environment depth information, and the three-dimensional reconstruction result.

In addition, to enable the virtual object independently generated by the related application to be naturally blended with a real scene, to prevent the user from feeling abrupt and unreal, the virtual object may be further adjusted based on a real scene image. For example, resolution of the virtual object is adapted to resolution of the real scene image, a location of the virtual object is adjusted, and a shadow of the virtual object is calculated based on a light condition in the real scene.

S105. Composite, as a fourth image of the real scene, the preprocessed first image with the second image obtained after the angle-of-view alignment, where the fourth image includes an image of the first resolution and an image of the second resolution.

For example, the head mounted display device determines, as target regions, a region in the preprocessed first image and a region in the second image obtained after the angle-of-view alignment that have overlapped angles of view. That is, images in the target regions in the two images are images obtained by photographing a same photographed object from a same angle of view at a same time. Image composition is performed on the preprocessed first image and the second image obtained after the angle-of-view alignment, to obtain the fourth image. An image of a target region in the fourth image is the same as an image of the target region in the second image obtained after the angle-of-view alignment, and has the relatively high second resolution. An image of a region other than the target region in the fourth image is the same as an image in the preprocessed first image, and has the relatively low first resolution. For example, as shown in FIG. 7, in a fourth image, resolution of a tree is the second resolution, and resolution of a dog, a ball, and the like other than the tree is the first resolution.

It may be understood that the target region in the fourth image is a visual focus region, namely, a central region, of the user, and has a relatively high resolution requirement. The region other than the target region in the fourth image is the foregoing background region, and has a relatively low resolution requirement, but has a relatively large field of view.

For example, in the foregoing image composition process, an image of the target region in the preprocessed first image may be removed, and then the image of the target region in the second image obtained after the angle-of-view alignment may be filled. After the filling, to avoid a problem such as an aliasing feeling caused in the image composition process, composition edge locations of the two images (namely, edge locations of the target regions) are blended by using a weighted blending method, so that a final composite image (namely, the fourth image) is more natural and real.

The image composition method may be any one or several of a direct cut-paste (cut-paste) technology, Alpha blending (alpha blending), multiband blending (multiband blending), or poisson blending (poisson blending). A specific image composition method is not limited in this application.

For example, the target regions may be determined by using a feature point matching method. It should be noted that, although the images of the target regions in the two images are obtained by photographing the same photographed object at the same time and have the same angle of view, because the two photos are photographed by two cameras at different locations, and pixel values of the images in the target regions in the two images are not completely consistent due to factors such as light, the target regions need to be determined based on the two images.

Simply, feature point recognition is separately performed on the two images, and then similarities of feature points in the two images are compared to determine the target regions. That is, regions with similar feature points in the two images are determined as regions with the same angle of view, namely, the target regions. The feature point is one or more pixels, and a similarity of feature points in the two images may be a similar relationship between pixel values of the feature points and pixel values of pixels around the feature points, for the following reason: Although pixel values of pixels in the target regions of the two images are different due to factors such as light, because the target regions display the same photographed object, there is a fixed relationship between a pixel in the target region and pixels around the pixel. For example, for a same leaf photographed at a same time, in an image 1, light is relatively strong and the entire leaf is relatively bright; and in an image 2, light is relatively dark and the entire leaf is relatively dark. In other words, a pixel value of the leaf in the image 1 is different from a pixel value of the leaf in the image 2. However, a difference between pixel values of different parts of the leaf in the image 1 is the same as a difference between pixel values of different parts of the leaf in the image 2.

The feature point recognition method may be any one or several of a SIFT algorithm, a SURF (Speeded Up Robust Features) algorithm, a FAST algorithm, an ORB (ORiented Brief and Rotated BRIEF) algorithm, or the like. A specific feature point recognition method is not limited in this embodiment of this application.

Certainly, the target regions may be determined by using another method. For example, due to a fixed location relationship between the first camera and the second camera, a location of the target region in the preprocessed first image after is also fixed, and a location of the target region in the second image obtained after the angle-of-view alignment is also fixed. Therefore, the location of the target region in the preprocessed first image and the location of the target region in the second image obtained after the angle-of-view alignment may be predetermined, and then image composition is directly performed based on the locations. A target region determining method is also not specifically limited in this embodiment of this application.

It should be noted that, in this embodiment of this application, step S105 may be performed before step S104, or steps S104 and S105 may be simultaneously performed. This is not limited in this application.

S106. Composite the fourth image with the third image to generate a fifth image, and display the fifth image, where the fifth image includes the real scene and the virtual object.

Specifically, image composition is performed on the fourth image and the third image, so that a composite image (namely, the fifth image) includes the virtual object in the third image, and also includes the real scene in the fourth image; in other words, implements a combination of reality and virtuality.

For example, in an image composition process of the third image and the fourth image, because the location of the virtual object is calculated when the third image is generated in step S104. Therefore, an image at the same location in the fourth image may be removed, and the virtual object in the third image may be filled. A weighted blending method is used on an edge of the filled location for blending, to obtain the fifth image. In other words, the image composition method described in step S 105 is used for processing.

Alternatively, in an image composition process of the third image and the fourth image, a picture or texture of the virtual object may be affixed to the same location in the fourth image based on the location that is of the virtual object and that is calculated in the foregoing step. For example, image composition may be implemented by using a shader (shader). In other words, the third image and the fourth image are used to jointly participate in rendering. For a specific rendering manner, refer to the related prior art. Details are not described herein.

It should be noted that a specific image composition method is not limited in this embodiment of this application.

It can be learned from the foregoing that the head mounted display device may separately display, on the left and right displays, images with a combination of reality and virtuality obtained according to the foregoing method, and there is a specific angle of view distance between the images on the left and right displays, so that the user enjoys a 3D effect during viewing.

In addition, because a field of view of a background region in the displayed image is large, a wider angle of view can be provided for the user, thereby meeting a requirement that a field of view of the human eye of the user is relatively wide. In addition, an image of a central region has high resolution, so that a high-definition image within a line-of-sight focus range of the user can be provided for the user. It can be learned that the technical solution provided in this application helps improve an immersion feeling, a reality feeling, and visual experience of the user.

In addition, an image of the background region has low resolution, so that a data amount during image processing and calculation complexity can be reduced, thereby helping reduce a delay during display.

It may be understood that, to implement the foregoing functions, the foregoing terminal or the like include corresponding hardware structures and/or software modules for performing the functions. A person of ordinary skill in the art should easily be aware that, in combination with the examples described in the embodiments disclosed in this specification, units, algorithms, and steps can be implemented in the embodiments of this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of the present invention.

In the embodiments of this application, the foregoing terminal or the like may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in the embodiments of the present invention, module division is an example and is merely logical function division. In an actual implementation, another division manner may be used.

The foregoing descriptions of the implementations allow a person skilled in the art to clearly understand that, for the purpose of convenient and brief description, division of the foregoing functional modules is taken as an example for illustration. In actual application, the foregoing functions may be allocated to different functional modules for implementation according to a requirement. That is, an inner structure of an apparatus is divided into different functional modules to implement all or some of the foregoing functions. For detailed working processes of the foregoing system, apparatus, and unit, refer to corresponding processes in the foregoing method embodiments. Details are not described herein again.

Functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or the processor 501 to perform all or some of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image processing method, applied to a head mounted display device, wherein two modules are disposed in the head mounted display device, each module comprises a camera module, a display screen corresponding to the camera module, and a processing module, the camera module comprises a first camera and a second camera, a field of view of the first camera is greater than a field of view of the second camera, and each module performs the following method:
in response to a detected startup operation, collecting, by the first camera, a first image of first resolution, and collecting, by the second camera, a second image of second resolution, wherein the first resolution is less than the second resolution;
generating, by the processing module, a fourth image based on the first image and the second image, wherein the fourth image is a real scene image and comprises an image of the first resolution and an image of the second resolution;
generating, by the processing module, a fifth image based on the fourth image and a third image that comprises a virtual object, wherein the fifth image comprises the real scene image and the virtual object; and
displaying, by the display screen of the module, the fifth image.

2. The method according to claim 1, wherein a distance from an optical center of a first camera of one module to an optical center of a first camera of the other module is 61 millimeters to 65 millimeters.

3. The method according to claim 2, wherein a distance from an optical center of the first camera to an optical center of the second camera in each module is less than 20 millimeters.

4. The method according to any one of claims 1 to 3, wherein each module further comprises an eyepiece, and the display screen is located between the eyepiece and the camera module.

5. The method according to claim 4, wherein an optical center of the eyepiece, an optical center of the display screen, and the optical center of the first camera in each module are located on a straight line.

6. The method according to any one of claims 1 to 5, wherein the generating, by the processing module, a fourth image based on the first image and the second image comprises:
adjusting, by the processing module, an angle of view of the second image to be the same as an angle of view of the first image; and
generating the fourth image based on an adjusted second image and the first image.

7. The method according to claim 6, wherein the adjusting, by the processing module, an angle of view of the second image to be the same as an angle of view of the first image comprises:
performing, by the processing module, rotation, translation, and non-coplanar row calibration processing on the second image, to enable the angle of view of the second image to be the same as the angle of view of the first image.

8. The method according to claim 6 or 7, wherein the generating, by the processing module, the fourth image based on an adjusted second image and the first image comprises:
determining, by the processing module as target regions, a region in the adjusted second image and a region in the first image that have overlapped angles of view; and
replacing an image of the target region in the first image with the adjusted second image.

9. The method according to any one of claims 1 to 8, wherein before the generating, by the processing module, a fifth image based on the fourth image and a third image that comprises a virtual object, the method further comprises:
generating, by the processing module based on posture information of the head mounted display device and the first image, the third image that comprises the virtual object.

10. The method according to any one of claims 1 to 9, wherein the generating, by the processing module, a fifth image based on the fourth image and a third image that comprises a virtual object comprises:
adjusting, by the processing module, resolution of the third image based on the first resolution of the first image, and/or adjusting a shadow of the virtual object in the third image based on light information in the first image; and
generating the fifth image based on the fourth image and an adjusted third image.

11. A head mounted display device, comprising two modules and a memory, wherein each module comprises a camera module, a display screen corresponding to the camera module, and a processing module, the camera module comprises a first camera and a second camera, a field of view of the first camera is greater than a field of view of the second camera, the memory is configured to store computer program code, the computer program code comprises a computer instruction, and when the processing module reads the computer instruction from the memory, each module in the head mounted display device is enabled to perform the following operations:
in response to a detected startup operation, collecting, by the first camera, a first image of first resolution, and collecting, by the second camera, a second image of second resolution, wherein the first resolution is less than the second resolution;
generating, by the processing module, a fourth image based on the first image and the second image, wherein the fourth image is a real scene image and comprises an image of the first resolution and an image of the second resolution;
generating, by the processing module, a fifth image based on the fourth image and a third image that comprises a virtual object, wherein the fifth image comprises the real scene image and the virtual object; and
displaying, by the display screen of the module, the fifth image.

12. The head mounted display device according to claim 11, wherein a distance from an optical center of a first camera of one module to an optical center of a first camera of the other module is 61 millimeters to 65 millimeters.

13. The head mounted display device according to claim 12, wherein a distance from an optical center of the first camera to an optical center of the second camera in each module is less than 20 millimeters.

14. The head mounted display device according to any one of claims 11 to 13, wherein each module further comprises an eyepiece, and the display screen is located between the eyepiece and the camera module.

15. The head mounted display device according to claim 14, wherein when the head mounted display device is horizontally placed, a connection line between the optical center of the first camera and the optical center of the second camera in each module is parallel to a horizontal plane.

16. The head mounted display device according to claim 14 or 15, wherein an optical center of the eyepiece, an optical center of the display screen, and the optical center of the first camera in each module are located on a straight line.

17. The head mounted display device according to any one of claims 11 to 16, wherein when the processing module reads the computer instruction from the memory, each module in the head mounted display device is further enabled to perform the following operations:
adjusting, by the processing module, an angle of view of the second image to be the same as an angle of view of the first image; and
generating the fourth image based on an adjusted second image and the first image.

18. The head mounted display device according to claim 17, wherein when the processing module reads the computer instruction from the memory, each module in the head mounted display device is further enabled to perform the following operation:
performing, by the processing module, rotation, translation, and non-coplanar row calibration processing on the second image, to enable the angle of view of the second image to be the same as the angle of view of the first image.

19. The head mounted display device according to claim 17 or 18, wherein when the processing module reads the computer instruction from the memory, each module in the head mounted display device is further enabled to perform the following operations:
determining, by the processing module as target regions, a region in the adjusted second image and a region in the first image that have overlapped angles of view; and
replacing an image of the target region in the first image with the adjusted second image.

20. The head mounted display device according to any one of claims 11 to 19, wherein when the processing module reads the computer instruction from the memory, each module in the head mounted display device is further enabled to perform the following operation:
generating, by the processing module based on posture information of the head mounted display device and the first image, the third image that comprises the virtual object.

21. The head mounted display device according to any one of claims 11 to 20, wherein when the processing module reads the computer instruction from the memory, each module in the head mounted display device is further enabled to perform the following operations:
adjusting, by the processing module, resolution of the third image based on the first resolution of the first image, and/or adjusting a shadow of the virtual object in the third image based on light information in the first image; and
generating the fifth image based on the fourth image and an adjusted third image.

22. A computer storage medium, comprising computer instructions, wherein when the computer instructions are run on a terminal, the terminal is enabled to perform the image processing method according to any one of claims 1 to 10.

23. A computer program product, wherein when the computer program product is run on a computer, the computer is enabled to perform the image processing method according to any one of claims 1 to 10.
